# EUROPÄISCHE PATENTSCHRIFT

(11) **EP 2 174 183 B1**
(45) Veröffentlichungstag und Bekanntmachung des Hinweises auf die Patenterteilung: **06.10.2010**
(21) Anmeldenummer: 08774882.8
(22) Anmeldetag: 08.07.2008
(51) Int. Cl.: G02F 1/1334

(54) **DISPLAYZELLE MIT KOMPARTIMENTIERTER FLÜSSIGKRISTALLSCHICHT, VERFAHREN ZU DEREN HERSTELLUNG UND HIERFÜR GEEIGNETE, EIN FLÜSSIGKRISTALL-MATERIAL ENTHALTENDE MISCHUNG**
DISPLAY CELL WITH COMPARTMENTALIZED LIQUID-CRYSTAL LAYER, METHOD FOR ITS PRODUCTION AND A LIQUID-CRYSTAL MATERIAL-CONTAINING MIXTURE SUITABLE THEREFOR
CELLULE D'AFFICHAGE DOTÉE D'UNE COUCHE DE CRISTAUX LIQUIDES COMPARTIMENTÉE, PROCÉDÉ POUR SA FABRICATION ET MÉLANGE CONTENANT UN MATÉRIAU DE CRISTAUX LIQUIDES ET CONVENANT DANS CE BUT

(30) Priorität: 10.07.2007 DE 102007032169
(43) Veröffentlichungstag der Anmeldung: 14.04.2010
(73) Patentinhaber: Fraunhofer-Gesellschaft zur Förderung der angewandten Forschung e.V., 80686 München (DE)
(72) Erfinder: BAUER, Monika, 15712 Königs Wusterhausen (DE); KUSCHEL, Frank, 06118 Halle (DE); MUELLER, Joachim, 12203 Berlin (DE)
(74) Vertreter: Leonhard, Frank Reimund
(86) Internationale Anmeldenummer: PCT/EP2008/058837
(87) Internationale Veröffentlichungsnummer: WO 2009/007363

(56) Entgegenhaltungen:
- US-A- 6 061 107
- HOPPE C E ET AL: "Polymer-dispersed liquid crystals based on polystyrene and EBBA: Analysis of phase diagrams and morphologies generated" MACROMOLECULAR CHEMISTRY AND PHYSICS 20030507 WILEY-VCH VERLAG DE, Bd. 204, Nr. 7, 7. Mai 2003 (2003-05-07), Seiten 928-935, XP002495714
- ISAYEV A. I., KYU T., CHENG S.Z.D.: "Liquid Crystalline Polymer Systems" 30. September 1996 (1996-09-30), AMERICAN CHEMICAL SOCIETY (DC) /AMERICAN CHEMICAL SOCIETY (DC) , USA , XP009105767 ISBN: 978-0-8412-3408-6 das ganze Dokument
- KUSCHEL F ET AL: "Oriented LC-microdroplets in polymer matrices: prospects of application" POLYMERS AND ADHESIVES IN MICROELECTRONICS AND PHOTONICS, 2001. FIRST INTERNATIONAL IEEE CONFERENCE ON OCT. 21-24, 2001, PISCATAWAY, NJ, USA,IEEE, 21. Oktober 2001 (2001-10-21), Seiten 295-299, XP010570113 ISBN: 978-0-7803-7220-7

## Beschreibung

Die vorliegende Erfindung betrifft ein Verfahren zur Herstellung von Schichten, die aus bei geeigneten Temperaturen homogenen und isotropen, ein Flüssigkristall-Material enthaltenden Mischungen erzeugt werden und nach geeigneter Abkühlung eine kohärente Polymerstruktur mit isolierten Flüssigkristall-Kompartimenten aufweisen. Diese Schichten eignen sich zur Verwendung in elektrooptischen Displays.

Elektrooptische Displayzellen bestehen in der Regel aus zwei wenige µm voneinander beabstandete Scheiben oder Platten, von denen mindestens eine lichtdurchlässig ist. Die Platten sind auf ihrer Innenseite in geeigneter Weise vorbehandelt, beispielsweise mit ITO (Indium-Zinn-Oxid) belegt, um elektrische Leitfähigkeit herzustellen. Zwischen den Platten befindet sich eine Flüssigkristall-Schicht. Um die Platten gleichmäßig voneinander beabstandet zu halten, werden üblicherweise Spacer verwendet, die beispielsweise aus mineralischem oder organischem Material hergestellten Kugeln oder aus durch UV-Licht generierten Stempeln bzw. Wänden bestehen. Allerdings wirken sich die ungleichmäßige Verteilung, das Ausweichen bei externem Druck bzw. die ungenügende mechanische Stabilität nachteilig auf die Displayfunktion aus.

Stand der Technik sind polymerdispergierte Flüssigkristalle (PDLC), die aus mikroheterogenen Flüssigkristall-Polymer-Compositen bestehen und als elektrooptische Lichtschalter eingesetzt werden. Darin enthaltene Polymerbestandteile sind in der Regel inkohärent. Um die gewünschten Streubedingungen zu erreichen, müssen die Ausdehnungen der LC-Bereiche entsprechend angepasst sein, beispielsweise für sichtbares Licht einen Durchmesser von ca. 0,3 bis 3 µm aufweisen. Solche polymerdispergierten Flüssigkristalle sind beispielsweise aus WO 87/01822, EP 540353 B1 und WO 2005/072304 bekannt. Soweit sie weitere erforderliche Bedingungen erfüllen, können sie mit Hilfe eines elektrischen Feldes zwischen einem lichtstreuenden und einem transparenten Zustand umgeschaltet werden. Lichtstreuung ist in der vorliegenden Erfindung ein Effekt, der weitestgehend vermieden werden sollte.

Thermisch induzierte Phasentrennung wurde für eine Reihe von Polymer-Flüssigkristall-Mischungen beschrieben, so z.B. für Polymethacrylcat-Flüssigkristall-Mischungen, siehe z.B. Kap. 13 aus A.I. Isayev et al., "Liquid Crystalline Polymer Systems, veröffentlicht im Jahre 1996 durch die American Chemical Society. Dabei gibt es verschiedene Techniken, durch die eine Phasentrennung induziert werden kann, z.B. SIPS (Lösemittel-induzierte Phasentrennung), TIPS (thermisch induzierte Phasentrennung) und PIPS (photoinitiierte Herstellung der Komposite), siehe F. Kuschel et al., "Oriented LC-Microdroplets in Polymer Matrices: Prospects of Application", Polymers and Adhesives in Microelectronics IEEE Conference, Oct. 21-24, 2001, Piscataway, NJ, USA.

In US 2004/0119911 A1 wird ein Flüssigkristall-Display mit thermooptischen Eigenschaften beschrieben. Die Größe der Flüssigkristall-Tröpfchen ist darin nicht angegeben.

US 6,061,107 offenbart bistabile cholesterische Flüssigkristall-Displays, Diese werden jeweils hergestellt, indem eine mit ITO beschichtete Glasplatte mit einer Lösung einer "gleichförmigen" erwärmten Mischung aus einem Thermoplasten (Polyvinylbutyral) und einem cholesterischen Flüssigkristall in Toluol beschichtet wird; nach Abdampfen des Lösungsmittels wird die beschichtete Glasplatte erwärmt und mit einer zweiten Glasplatte verbunden, wobei der Abstand zwischen beiden Platten (5 µm) durch die Anbringung von Abstandshaltern sichergestellt wird. Beim kontrollierten Abkühlen bilden sich Flüssigkristall-Tröpfchen innerhalb der Polymermatrix, die eine ovale oder längliche Foprm und einen Durchmesser von etwa 10-50µm aufweisen. Polymerdispergierte Flüssigkristalle auf Basis von Polystyrol und N-4-Ethoxybenzyliden-4'butylanilin (EBBA) sowie von Poly(butylmethacrylat) und der nematischen Mischung E7 sind in C.E. Hoppe et al., Macromol. Chem. Phys. 2003, 204, 928-935 beschrieben. Die nematischen Domänen der ersteren Zusammensetzung weisen Durchmesser von wenigen µm bis zu über 30 µm auf.

Es ist Aufgabe der vorliegenden Erfindung, Flüssigkristallschichten für Displayzellen bereitzustellen, deren intrinsische Eigenschaften zu einer verbesserten mechanischen Stabilität der Displayzelle führen. Außerdem ist es Aufgabe der vorliegenden Erfindung, Flüssigkristallschichten bereitzustellen, deren optische Eigenschaften sich flächenselektiv beeinflussen lassen, ohne dass eine spätere Vermischung der selektiv beeinflussten Bereiche mit anderen Bereichen befürchtet werden müsste. Die Erfindung soll schließlich auch die Aufgabe lösen, Displayzellen bereitzustellen, die trotz hoher mechanischer Stabilität biegbar sind, ohne dass es zu einer Zerstörung der flächenselektiven Beeinflussbarkeit kommt.

Gelöst wird die Aufgabe der Erfindung durch eine Displayzelle, eine Mischung und ein Verfahren gemäß den Ansprüchen 1-15. Die Displayzelle ist mit einem inhomogenen und anisotropen Material, nämlich einem Flüssigkristall-Polymer-Composit, befüllt, das in der Zelle als Schicht mit unterschiedlichen Bereichen vorliegt, die unterschiedliche Eigenschaften aufweisen. Ein erster Bereich aus Flüssigkristall-Material ist in einzelne Kompartimente untergliedert. Ein zweiter Bereich aus einem organischen Polymermaterial ist kohärent, indem er die Kompartimente aus Flüssigkristall-Material umschließt. Dieser Bereich untergliedert sich wiederum in erste Teilbereiche mit einem ersten Polymermaterial (A) und zweite Teilbereiche mit einem zweiten Polymermaterial (B), wobei das Polymermaterial (B) eine geringere Glasübergangstemperatur besitzt als das Polymermaterial (A). Dabei können die Flüssigkristall-Kompartimente ausschließlich, im Wesentlichen oder hauptsächlich aus einem Flüssigkristall-Material bestehen, während die diese Kompartimente umschließenden Polymere ausschließlich, im Wesentlichen oder hauptsächlich aus einem organischen Polymermaterial bestehen. Unter "im Wesentlichen" soll dabei zu verstehen sein, dass der Anteil an anderen Materialien als demjenigen Material, das im Wesentlichen vorhanden sein soll, so gering ist, dass die Eigenschaften des relevanten Materials im Wesentlichen unverändert sind, also weiterhin vorherrschen und durch das Vorhandensein des oder der anderen Materialien nicht beeinträchtigt werden. "Hauptsächlich" soll im Zusammenhang der vorliegenden Erfindung bedeuten, dass dasjenige Material, das "hauptsächlich" vorhanden ist, mehr als 50 Ma.-% des Gesamtmaterials ausmacht, sofern ein (einziges) weiteres Material vorhanden ist, während sein Anteil dann, wenn mindestens zwei weitere Materialien vorhanden sind, größer sein muß als derjenige jedes einzelnen der anderen Materialien, und vorzugsweise ebenfalls 50 Ma.-% des Gesamtmaterials übersteigt.

Die Displayzelle umfasst zwei gleichmäßig voneinander beabstandete Scheiben, von denen mindestens eine lichtdurchlässig ist. Vorzugsweise sind die Innenseiten der beiden Scheiben mit einem elektrisch leitenden Material, beispielsweise ITO, versehen.

Die Kompartimente des ersten Bereichs haben eine laterale Ausdehnung, die größer ist als die Dicke der Schicht und/oder im Bereich zwischen 10µm bis 100µm liegt. wobei es die Regel sein soll, dass zumindest 30%, vorzugsweise mindestens 50% der Kompartimente und häufig ein noch größerer Anteil oder sogar alle der Kompartimente einen Durchmesser von mindestens 20 µm besitzen. Der Durchmesser der Kompartimente senkrecht zur Schicht liegt in einer ähnlichen Größenordnung, sofern die Schicht dies überhaupt zulässt. Da die Flüssigkristall-Schicht häufig aber nur eine Dicke von etwa 2-10 µm besitzt, reichen die Kompartimente des ersten Bereichs (Flüssigkristall-Kompartimente) in der Regel vollständig durch die Schicht hindurch und damit von der einen bis zur anderen Wand der Displayzelle, was wünschenswert ist. Der kohärente Polymermaterial-Bereich ist dabei in der Regel derart strukturiert, dass die Flüssigkristall-Kompartimente durch diesen Bereich einen Abstand von mindestens 1 µm und in der Regel von etwa 1 bis 20 µm zueinander besitzen.

Mit der Struktur der erfindungsgemäßen Displays lassen sich sowohl optische Eigenschaften des Flüssigkristall-Materials selektiv steuern, z.B. in ausgewählten Flüssigkristall-Kompartimenten, als auch die Flüssigkristall-Schichten mechanisch im Ganzen stabilisieren. Die erfindungsgemäßen Flüssigkristallschichten lassen sich daher vorteilhaft in elektrooptischen Displays einsetzen.

Ein Verfahren zum Herstellen von mit den voranstehend definierten Schichten befüllten Displayzellen umfasst die Bereitstellung einer Mischung, die ein Flüssigkristall-Material sowie ein geeignetes Polymermaterial enthält. Diese Mischung wird über die Klärtemperatur des Flüssigkristall-Materials hinaus erwärmt, wobei sie homogen und isotrop wird. In diesem Zustand kann sie zwischen die Scheiben oder Platten einer Displayzelle eingefüllt werden. Beim anschließenden Abkühlen separiert sie sich in die genannten ersten und zweiten Bereiche.

Als organisches Polymermaterial (A) eignen sich für die vorliegende Erfindung ganz allgemein organische Polymere, die eine Stützfunktion für das herzustellende Display ausüben können. Hierfür eignen sich insbesondere organische Polymere mit Glasübergangstemperaturen (T_{g}) von mindestens 60°C, vorzugsweise von mindestens 80°C und ganz besonders bevorzugt von mindestens 100°C. Je höher die Glasübergangstemperatur des eingesetzten Polymeren (A) ist, desto höher ist die erzielbare mechanische Stabilität. Das Polymermaterial muss in der Lage sein, mit Flüssigkristall-Materialien oberhalb von deren Klärtemperatur homogene, isotrope Mischschmelzen zu bilden, und zwar zumindest entweder in Gegenwart von Lösungsmittel oder in Abwesenheit eines Lösungsmittels. Aus den homogenen, isotropen Mischschmelzen sollen nach Entfernung eines gegebenenfalls verwendeten Lösungsmittels und nach geeigneter Abkühlung dann die beschriebenen kohärenten Polymerstrukturen entstehen.

Es ist ein bevorzugtes, wenn auch nicht immer notwendiges Merkmal der Polymere (A), dass ihre Glasübergangstemperaturen mehr als 20° K oberhalb der Klärtemperaturen der jeweils verwendeten Flüssigkristall-Materialien liegt. Besonders günstig sind Temperaturdifferenzen im Bereich von 25° - 100° K.

Die chemische Zusammensetzung der genannten Polymere (A) ist prinzipiell nicht beschränkt, sofern die oben erwähnten Bedingungen erfüllt sind. Günstig sind Polymere, deren Molekülvolumen nicht zu gering ist. Polyacrylate und -methacrylate (nachstehend als Gruppe auch als Poly(meth-)acrylate bezeichnet) sind hierfür besonders gut geeignet, darunter insbesondere Polyalkyl- und Polycycloalkyl-acrylate und -methacrylate mit mindestens 2 Kohlenstoffatomen im Alkoholteil des Esters. Methacrylate mit einem verzweigten Alkylrest und/oder mindestens einer Ringstruktur im Alkoholteil, die ggf. kondensiert und/oder überbrückt sein kann, sind günstig. Als Ringstrukturen bieten sich substituierte oder unsubstituierte alicyclische Struktureinheiten wie Cyclohexyl an, als überbrückte Ringstrukturen z.B. Bicyclodecyl (Decahydronaphthyl) oder Isobornyl. Auch können im Alkoholteil der Monomereinheiten mehrere Cycloalkyleinheiten vorhanden sein. Diese Ringstrukturen können direkt den Alkoholteil der Ester bilden oder weitere Alkyl(en)gruppen wie t-Butyl als endständige oder zwischenliegende Gruppen enthalten. Ein Beispiel für einen solchen Alkoholteil ist der 4-Cyclohexylcyclohexyl-Rest. Als kondensierte Ringstrukturen sind beispielsweise teilweise oder vollständig hydrierte Naphthylreste geeignet. Auch Aryl oder Phenyl können Bestandteil des Alkoholteils sein. Polymethylmethacrylat, das häufig für PDLCs eingesetzt wird, ist dagegen nicht geeignet, weil es zwar eine ausreichend hohe Glasübergangstemperatur besitzt, aber sich im Allgemeinen nicht unter Ausbildung kohärenter Strukturen vom Flüssigkristall-Material separiert, sondern inkohärente, körnige Polymerausscheidungen bildet. Die oben erwähnten Polymere (A) können als Homopolymere oder Copolymere, rein oder in Mischung eingesetzt werden.

Um die zweiten Bereiche aus Polymermaterial teilweise in Form von relativ starren Teilbereichen sowie aus weiteren, weicheren Teilbereichen ausbilden zu können, werden zusätzlich zu den Polymeren (A) weitere organische Polymermaterialien eingesetzt, die neben oder um Gruppen von Kompartimenten mit einer starren Wand herum die Bildung von mit weichen Wänden umschlossenen Flüssigkristall-kompartimenten ermöglichen können. Diese organischen Polymere (B) verleihen nach ihrer interzellulären Ausscheidung neben oder rund um Gruppen von Flüssigkristall-Material-Kompartimenten mit starren Wänden aus Polymermaterial (A) der Schicht eine verbesserte Flexibilität, wobei beim Verbiegen einer gefüllten, z.B. flexible Scheiben aufweisenden Displayzelle bei möglichen Brüchen oder Rissen in den starreren Teilbereichen ein Zusammenfließen von Flüssigkristall-Material aus einer größeren Zahl von Kompartimenten verhindert wird, weil die weicheren Teilbereiche der Biegung nachgeben können, ohne zu brechen oder zu reißen (Falzscharnier-Effekt). Die Polymere (B) sollten Glasübergangstemperaturen aufweisen, die unterhalb der Glasübergangstemperaturen der Polymere (A) und vorzugsweise nahe oder unterhalb der Klärtemperaturen der Flüssigkristallmischungen liegen. Günstig sind T_{g}-Werte bei oder unterhalb von 85°C. Die Polymere (B) sollten in dem Flüssigkristall-Material oberhalb des Klärpunktes nach Möglichkeit außerdem rückstandsfrei löslich sein. In der Regel handelt es sich um unvernetzte Polymere. Weitere grundsätzliche Bedingungen für die Polymere (B) bestehen nicht, so dass hierfür eine ganze Anzahl unterschiedlichster Materialien in Frage kommt, beispielsweise Poly(meth-)acrylate mit Alkylgruppen, die mindestens 2 Kohlenstoffatome aufweisen, Celluloseester oder Polyvinylacetale. Polyethylmethacrylat ist ein gut geeignetes Material, des weiteren Celluloseacetate, -butyrate oder acetatbutyrate. Die Verwendung von Polyethylen scheidet dagegen wegen der Unmischbarkeit dieses Polymers mit den sonstigen Materialien der Erfindung aus.

Es hat sich herausgestellt, dass die Größe der gebildeten Flüssigkristallkompartimente in Abhängigkeit von dem sie umgebenden Polymermaterial geringfügig schwanken kann. Flüssigkristallkompartimente, die von weicheren Wänden umgeben sind, können etwas kleiner ausfallen als diejenigen, die von härteren Wänden umgeben sind. Erfindungsgemäß können daher in den Bereichen mit dem weicheren Polymer Flüssigkristallkompartimente vorliegen, die eine laterale Ausdehnung von weniger als 20 µm, z. B. von nur ca. 10 µm besitzen.

Es ist vorteilhaft, jedoch nicht zwingend erforderlich, dass die unterschiedlichen Polymere (A) und (B) bei Temperaturen unterhalb der Klärtemperatur des Flüssigkristall-Materials miteinander unverträglich sind. Allerdings sollen sie alle in der isotropen Flüssigkkristallschmelze rückstandsfrei löslich sein.

Als Flüssigkristall-Material können alle üblichen Flüssigkristall-Materialien oder Mischungen daraus eingesetzt werden, beispielsweise nematische, cholesterische oder andere Flüssigkristall-Materialien. Diese stehen dem Fachmann in großem Umfang zur Verfügung.

Zur Herstellung der Schichten werden das organische Polymermaterial und das Flüssigkristall-Material miteinander vermischt. Der Anteil des Polymermaterials liegt dabei in der Regel bei ca. 5 bis 30 Ma.-%, bevorzugt 10 bis 20 Ma.%, bezogen auf die Summe von Polymer und Flüssigkristall. Da die mechanische Festigkeit der auszubildenden Schicht bei einem gegebenen Polymeranteil unter anderem von der Glasübergangstemperatur (T_{g}) des Polymeren (A) abhängt, kann die Menge an Polymermaterial dann, wenn dieses eine hohen T_{g}-Wert aufweist, ggf. eher in einem unteren Bereich ausgewählt werden, wenn es aber einen niedrigeren T_{g}-Wert besitzt, eher in einem höheren Anteil. In der zweiten Ausführungsform der Erfindung beträgt der Anteil des Polymermaterials (B), bezogen auf die Summe der Polymeren (A) und (B), vorzugsweise 10 bis 40 Ma.-%. Bezogen auf die Gesamtmischung aus Polymer (A), Polymer (B) und Flüssigkristall-Material sollten es vorzugsweise ca. 1 bis 10 Ma.-% sein.

Die Mischung kann bei Bedarf ein Lösungsmittel enthalten. Zur Herstellung der Schicht wird sie auf eine Temperatur gebracht, die oberhalb der Klärtemperatur des Flüssigkristall-Materials liegt. Dabei bildet sich eine homogene, isotrope Mischschmelze oder Lösung. Gegebenenfalls nach Entfernen des Lösungsmittels wird diese Mischschmelze oder Lösung beispielsweise zwischen zwei transparente, elektrisch leitende Glasscheiben oder Polymerfolien eingeschlossen, wozu man sich vorzugsweise der Kapillarwirkung bedient. Anschließend wird die Mischschmelze einer kontrollierten Abkühlung unterzogen. Dabei entstehen durch Phasenseparation mikrozellularstrukturierte, polymerumschlossene Flüssigkristall-Kompartimente wie oben beschrieben. Durch das verwendete Kühlregime sowie die Zusammensetzung der Mischschmelze kann deren Anteil und deren mittlere Ausdehnung reguliert werden. Eine schnelle Abkühlung bewirkt die Ausbildung sehr feiner Strukturen oder Kompartimente, während eine langsamere Abkühlung zu größeren Strukturen führt. Der einzige oder letzte Abkühlschritt sollte daher nicht zu schnell erfolgen. Es ist besonders günstig, zuerst eine schnelle Abkühlung herbeizuführen, sodann nochmals kurz mindestens soweit zu erwärmen, dass die Mischschmelze homogen-isotrop wird und schließlich so langsam abzukühlen, dass die gewünschte Kompartimentgröße erreicht wird.

Wie bereits oben erwähnt, haben die Flüssigkristallkompartimente der entstandenen Schicht vorzugsweise eine laterale Ausdehnung, die größer ist als die Dicke der Schicht. Wenn die Dicke z.B. bei 2-10µm liegt, ist es daher wünschenswert, dass die laterale Ausdehnung der Flüssigkristallkompartimente ca. 10 bis 200µm, vorzugsweise 20-100µm beträgt. Die Dicke der umschließenden Polymerwände beträgt vorzugsweise 1 bis 20 µm.

Beim Abkühlen verfestigen sich die Bereiche aus dem Polymermaterial, so dass die entstandene kompartimentierte Schicht eine hohe mechanische Stabilität aufweist. Die zwischen den Polymerstrukturen eingeschlossenen Bereiche, die ganz, im Wesentlichen oder hauptsächlich aus Flüssigkristall-Material bestehen, lassen sich ggf. flächenselektiv beeinflussen, beispielsweise durch UV-Strahlung, die eine Farbveränderung bewirkt. Da Flüssigkristall-Material kaum oder gar nicht durch das Polymermaterial in benachbarte Flüssigkristall-Bereiche diffundieren kann, besteht keine Gefahr einer späteren Vermischung beeinflusster Bereiche mit nicht beeinflussten oder anders beeinflussten Bereichen.

Nachstehend soll die Erfindung anhand von Beispielen näher erläutert werden.

### Beispiel 1 (Vergleichsbeispiel hilfreich zum Verständnis der Erfindung)

82,1 mg einer Flüssigkristallmischung, die unterhalb einer Klärtemperaturvon 60°C nematisch ist, und die aus 39,0 Ma.-% 4'-Pentylbiphenyl-4-carbonsäurenitril, 24,7 Ma.-% 4'-Heptylbiphenyl-4-carbonsäurenitril, 13,3 Ma.-% 4'-Octylbiphenyl-4-carbonsäurenitril, 9,1 Ma.-% 1-Pentyl-[4,1';4',1 "]-terphenyl-4"-carbonsäurenitril, 8,6 Ma.-% 4-Butylbenzoesäure-4'-cyanphenylester, 1,7 Ma.-% 4-Pentylbenzoesäure-4'-cyanphenylester, 3,4 Ma.-% 4-Heptylbenzoesäure-4'-cyanphenylester, 0,2 Ma.-% Cholesterylnonanoat besteht, sowie 17,9 mg Poly(cyclohexylmethacrylat), das eine Glasübergangstemperatur von 107°C und eine mittlere Molmasse von 65000 aufweist, werden in 2 mL Chloroform gelöst. Einige Tropfen dieser Lösung werden durch Erwärmen auf 110°C in einem kleinen Glastiegel vom Lösungsmittel befreit und in eine homogene Mischschmelze überführt. Mit Hilfe einer erwärmten Edelstahlspitze wird ein Tropfen dieser Schmelze an die Einfüllöffnung einer ebenfalls erwärmten Glas-Displayzelle überführt, deren mit ITO versehene Innenflächen einen Abstand von ca. 4 µm aufweisen. Nach erfolgter Füllung wird die Zelle innerhalb von wenigen Sekunden bis auf Raumtemperatur abgekühlt. Abschließend wird die Zelle in einem Ofen mit programmierbarer Heizung/Kühlung auf 130°C erwärmt und wieder abgekühlt, wobei die Abkühlung von 110°C auf 30°C mit einer Geschwindigkeit von 1 K/min. erfolgt. Die erhaltene Compositschicht besteht aus isolierten Flüssigkristall-Kompartimenten von durchschnittlich 40 µm Durchmesser, die von ca. 5 µm dicken Polymerwänden umschlossen sind. Diese Wände verhindern auch bei äußerem Druck auf die Zelle eine irreversible Beeinträchtigung der elektrooptischen Funktion sowie eine Zerstörung der Kompartimente und damit eine Vermischung benachbarter Flüssigkristallbereiche.

### Beispiel 2 (Vergleichsbeispiel hilfreich zum Verständnis der Erfindung)

Nach dem in Beispiel 1 beschriebenen Verfahren wird eine Glas-Displayzelle bei 120°C mit einer homogen-isotropen Mischung gefüllt, die aus 20 Ma.-% Poly-(1,2,3,4-tetrahydro-1-naphthylmethacrylat), welches eine Glasübergangstemperatur von 118°C und eine mittlere Molmasse von 25000 aufweist und das durch radikalische Polymerisation von 1,2,3,4-Tetrahydro-1-naphthylmethacrylat hergestellt wird, sowie aus 80 Ma.-% der nematischen Flüssigkristallmischung ZOC-1002 XX (Chisso Co.) mit einer Klärtemperatur von 79°C besteht. Nach erfolgter Füllung wird die Zelle mit einer Geschwindigkeit von 1,5 K/Min. bis auf Raumtemperatur abgekühlt. Die erhaltene Compositschicht gleicht der in Beispiel 1 erhaltenen. Sie besteht aus Flüssigkristall-Kompartimenten mit einer durchschnittlichen Breite von ca. 40 µm.

### Beispiel 3 (Vergleichsbeispiel hilfreich zum Verständnis der Erfindung)

Es wird gemäß Beispiel 2 eine Glas-Displayzelle hergestellt mit der Abänderung, dass als Polymer Poly-(4-cyclohexylcyclohexylmethacrylat), welches eine Glasübergangstemperatur von 127°C sowie eine mittlere Molmasse von 21000 aufweist und das durch radikalische Polymerisation von 4-Cyclohexylcyclohexylmethacrylat entsteht, verwendet wird. Die erhaltene Compositschicht gleicht der in Beispiel 2 erhaltenen.

### Beispiel 4 (Vergleichsbeispiel hilfreich zum Verständnis der Erfindung)

Es wird gemäß Beispiel 2 eine Glas-Displayzelle hergestellt mit der Abänderung, dass als Polymer Poly-(4-tert.-butylcyclohexylmethacrylat), welches eine Glasübergangstemperatur von 155°C sowie eine mittlere Molmasse von 33000 aufweist und das durch radikalische Polymerisation von 4-tert.-Butylcyclohexyl-methacrylat entsteht, verwendet wird. Die Compositschicht enthält dicht nebeneinander angeordnete Flüssigkristall-Kompartimente mit einer durchschnittlichen Breite von ca. 15 µm und einer Dicke der Polymerwände von ca. 3 µm.

### Beispiel5 (Vergleichsbeispiel hilfreich zum Verständnis der Erfindung)

Mit einer Mischung bestehend aus 80 Ma.-% der in Beispiel 1 verwendeten Flüssigkristallmischung sowie 20 Ma.-% Poly-(decahydro-2-naphthylmethacrylat), das eine Glasübergangstemperatur von 145°C und eine mittlere Molmasse von 25000 aufweist und dass durch radikalische Polymerisation von Decahydro-2-naphthylmethacrylat hergestellt wird, wird nach dem in Beispiel 1 beschriebenen Verfahren bei 120°C eine PET-Folien- Displayzelle gefüllt, deren mit ITO versehene Innenflächen einen Abstand von ca. 4 µm aufweisen. Nach erfolgter Füllung wird die Zelle mit einer Geschwindigkeit von 1,5 KlMin. bis auf Raumtemperatur abgekühlt. Die Compositschicht enthält dicht nebeneinander angeordnete Flüssigkristall-Kompartimente mit einer durchschnittlichen Breite von ca. 40 µm und einer Dicke der Polymerwände von ca. 10 µm.

### Beispiel 6 (Vergleichsbeispiel hilfreich zum Verständnis der Erfindung)

Eine homogen-isotrope Mischung, bestehend aus 79 Ma.-% der in Beispiel 1 verwendeten Flüssigkristallmischung sowie 21 Ma.-% Poly-(cyclohexylmethacrylat-co-isobornylmethacrylat) (0,5:0,5), dass eine Glasübergangstemperatur von 127°C und eine mittlere Molmasse von 55000 aufweist und das durch radikalische Copolymerisation von Cyclohexylmethacrylat und Isobornylmethacrylat hergestellt wird, dient zur Füllung einer Glas-Displayzelle (Abstand der ITO-Flächen 4 µm) bei 116°C nach dem in Beispiel 1 beschriebenen Verfahren. Die Kühlung der gefüllten Zelle erfolgt im Bereich zwischen +60°C und +40°C mit einer Rate von 1,2 K/Min., oberhalb und unterhalb dieses Bereiches mit einer Rate von 2K/Min. Die Compositschicht enthält dicht nebeneinander angeordnete Flüssigkristall-Kompartimente mit einer durchschnittlichen Breite von ca. 50 µm und einer Dicke der Polymerwände von ca. 10 µm.

### Beispiel 7 (Vergleichsbeispiel hilfreich zum Verständnis der Erfindung)

Eine homogen-isotrope Mischung, bestehend aus 76,2 Ma.-% der nematischen Flüssigkristallmischung ZOC-1002 XX (Chisso Co.), 4,8 Ma.-% des chiralen Dotierstoffes 1.4:3.6-Dianhydro-D-sorbit-2.5-di(6-n-hexyloxy-2-naphthoesäureester) (DE 103 51 364 B4) sowie 19 Ma.-% Poly-(cyclohexylmethacrylat), dient bei 120°C nach dem in Beispiel 1 beschriebenen Verfahren zur Füllung einer Glas-Displayzelle mit einem Abstand der ITO-Flächen von ca. 10 µm. Die durch Kühlung mit einer Rate von 1,5 K/Min. erhaltene Compositschicht enthält dicht nebeneinander angeordnete Kompartimente, gefüllt mit cholesterischem Flüssigkristall-Material. Das erhaltene Display ist bistabil. Durch Anlegen von 50V- 50 Hz-Wechselspannungsimpulsen lässt sich das Display von der Grün reflektierenden planaren Textur in die transparente fokalkonische Textur umschalten und umgekehrt.

### Beispiel 8 (erfindungsgemäß)

Eine homogen-isotrope Mischung enthält 79,7 Ma.-% der nematischen Flüssigkristallmischung ZOC-1 002 XX (Chisso Co.), 17,2 Ma.-% Poly-(decahydro-2-naphthylmethacrylat) als Polymer (A) sowie 3,1 Ma.-% Celluloseacetatbutyrat (Handelsbezeichnung CAB 551-0.01, Eastman) als Polymer (B), letzteres weist eine Glasübergangstemperatur von 85°C auf. Ein Teil dieser Mischung dient zum Füllen einer Glas-Displayzelle bei 120°C nach dem in Beispiel 1 beschriebenen Verfahren. Der Abstand der mit ITO versehenen Innenseiten der Displaygläser beträgt 4 µm. Nach Kühlung der gefüllten Zelle bis Raumtemperatur mit einer Rate von 1,2 K/Min. wird eine Compositschicht erhalten, die aus Ansammlungen von mit Polymer A umschlossenen Kompartimenten der 1. Art mit einer mittleren Breite von 50 µm sowie aus dazwischen liegenden Ketten von durch interzelluläre Ausscheidung gebildeten kleineren Kompartimenten 2. Art mit einer mittleren Breite von 10 µm bestehen.

### Beispiel 9 (erfindungsgemäß)

Eine homogen-isotrope Mischung besteht aus 79,1 Ma.-% der nematischen Flüssigkristallmischung ZOC-1 002 XX (Chisso Co.), 18 Ma.-% Poly-(decahydro-1-naphthylmethacrylat) als Polymer (A) sowie 2,9 Ma.-% Poly-(ethylmethacrylat) als Polymer (B). Letzteres weist eine Glasübergangstemperatur von 65°C auf. Mit dieser Mischung wird analog Beispiel 8 eine Glas-Displayzelle (Abstand der ITO-Flächen 4 µm) bei 115°C gefüllt. Die nach Kühlung mit einer Rate von 1,2 K/Min. erhaltene Compositschicht besteht aus der in Beispiel 8 beschriebenen Anordnung von Kompartimenten 1. und 2. Art und deren Ausdehnung.

## Patentansprüche

1. Displayzelle, umfassend zwei gleichmäßig voneinander beabstandete Scheiben, von denen mindestens eine lichtdurchlässig ist, wobei der Zwischenraum zwischen den Scheiben mit einer ein Flüssigkristall-Material aufweisenden, inhomogenen und anisotropen Schicht gefüllt ist und einen ersten Bereich, der ganz, im Wesentlichen oder hauptsächlich aus Flüssigkristall-Material besteht, sowie einen zweiten Bereich aufweist, der ganz, im Wesentlichen oder hauptsächlich aus organischem Polymermaterial besteht, wobei der erste Bereich in separate Kompartimente untergliedert ist und der zweite Bereich diese Kompartimente umschließt, wobei die laterale Ausdehnung der Kompartimente größer ist als die Dicke der Schicht und/oder im Bereich von 10 µm bis 100 µm liegt, **dadurch gekennzeichnet, dass** der zweite Bereich erste Teilbereiche mit einem ersten Polymermaterial (A) und zweite Teilbereiche mit einem zweiten Polymermaterial (B) aufweist, wobei das Polymermaterial (B) eine geringere Glasübergangstemperatur besitzt als das Polymermaterial (A).

2. Displayzelle nach Anspruch 1, **dadurch gekennzeichnet, dass** das erste Polymermaterial (A) ein organisches Polymer mit einer Glasübergangstemperatur von mindestens 60°C, vorzugsweise von mindestens 80°C und besonders bevorzugt von mindestens 100°C oder eine Mischung solcher Polymere aufweist.

3. Displayzelle nach einem der Ansprüche 1 und 2, **dadurch gekennzeichnet, dass** das erste Polymermaterial (A) aus einem oder mehreren Poly(meth-)acrylaten besteht oder dieses/diese Poly(meth-)acrylate als Hauptbestandteil enthält.

4. Displayzelle nach einem der voranstehenden Ansprüche, **dadurch gekennzeichnet, dass** das zweite Polymermaterial (B) eine Glasübergangstemperatur aufweist, die nahe oder unterhalb der Klärtemperatur des Flüssigkristall-Materials liegt.

5. Displayzelle nach Anspruch 4, worin ein Teil der Flüssigkristall-Kompartimente von Teilbereichen mit dem ersten Polymermaterial (A) und ein anderer Teil der Flüssigkristall-Kompartimente von Teilbereichen mit dem zweiten Polymermaterial (B) umgeben sind.

6. Displayzelle nach Anspruch 5, worin diejenigen Flüssigkristall-Kompartimente, die von Teilbereichen mit dem zweiten Polymermaterial (B) umgeben sind, eine laterale Ausdehnung von unter 20 µm aufweisen.

7. Mischung, umfassend ein Flüssigkristall-Material sowie ein organisches Polymermaterial, wobei die Mischung in der Lage ist, bei einer Erwärmung über die Klärtemperatur des Flüssigkristall-Materials hinaus homogen und isotrop zu werden und sich beim Abkühlen unter die Klärtemperatur des Flüssigkristall-Materials in unterschiedliche Bereiche zu separieren, wobei ein erster Bereich ausschließlich, im Wesentlichen oder hauptsächlich aus anisotropem Flüssigkristall-Material besteht, während ein zweiter Bereich ausschließlich, im Wesentlichen oder hauptsächlich aus organischem Polymermaterial besteht, wobei das organische Polymermaterial in einem Anteil von 5 bis 30 Ma.-% vorliegt, bezogen auf die Summe aus Flüssigkristall-Material und organischem Polymermaterial, wobei das Polymermaterial ein erstes Polymermaterial (A) mit einer Glasübergangstemperatur von mindestens 60°C aufweist, **dadurch gekennzeichnet, dass** das Polymermaterial ein zweites Polymermaterial (B) mit einer Glasübergangstemperatur aufweist, die unter derjenigen des ersten Polymermaterials (A) liegt.

8. Mischung nach Anspruch 7, worin das erste Polymermaterial (A) ein Polyacrylat oder Polymethacrylat enthält, ausgewählt unter Polyalkyl(meth-)acrylaten sowie Polycycloalkyl(meth-)acrylaten, die mindestens einen substituierten oder unsubstituierten cyclischen Kohlenwasserstoff und/oder eine verzweigte Alkylgruppe im Alkoholteil der Ester aufweisen.

9. Mischung nach Anspruch 8, worin der substituierte oder unsubstituierte cyclische Kohlenwasserstoff ein Cycloalkan und/oder Bestandteil eines kondensierten oder überbrückten Ringssystems ist.

10. Mischung nach Anspruch 7 oder 8, worin das Flüssigkristall-Material eine Klärtemperatur besitzt, die in der Nähe oder unterhalb der Glasübergangstemperatur des Polymermaterials liegt.

11. Mischung nach einem der Ansprüche 7 bis 10, **dadurch gekennzeichnet, dass** die Glasübergangstemperatur des ersten organischen Polymers (A) mindestens 80°C, vorzugsweise mindestens 100°C beträgt.

12. Mischung nach einem der Ansprüche 8, 9 oder 10, **dadurch gekennzeichnet, dass** das zweite Polymermaterial (B) eine Glasübergangstemperatur aufweist, die nahe oder unterhalb der Klärtemperatur des Flüssigkristall-Materials liegt.

13. **Verfahren** zum Herstellen einer kompartimentierten Flüssigkristallschicht in einer Displayzelle, aufweisend die folgenden Schritte:
(a) Bereitstellen einer Mischung, umfassend ein Flüssigkristall-Material sowie ein organisches Polymermaterial, das mindestens ein erstes Polymermaterial (A) aufweist, wobei die Mischung in der Lage ist, bei einer Erwärmung über die Klärtemperatur des Flüssigkristall-Materials hinaus homogen und isotrop zu werden und sich beim Abkühlen unter die Klärtemperatur des Flüssigkristall-Materials in unterschiedliche Bereiche zu separieren, wobei ein erster Bereich ausschließlich, im Wesentlichen oder hauptsächlich aus anisotropem Flüssigkristall-Material besteht, während ein zweiter Bereich ausschließlich, im Wesentlichen oder hauptsächlich aus organischem Polymermaterial besteht,
(b) Erwärmen der Mischung auf eine Temperatur oberhalb der Klärtemperatur des Flüssigkristall-Materials,
(c) Einfüllen der Mischung in eine Displayzelle, und
(d) Abkühlen der Mischung mit Hilfe eines Temperaturregimes, das die Separierung von Flüssigkristall-Material und Polymermaterial ermöglicht, wobei der oder ein letzter Abkühlschritt so langsam erfolgt, dass die Bereiche aus Flüssigkristall-Material eine laterale Ausdehnung von 10 µm -100 µm erhalten,
**dadurch gekennzeichnet, daß** die in Schritt (a) bereitgestellte Mischung ein zweites Polymermaterial (B) aufweist, wobei das zweite Polymermaterial (B) eine geringere Glasübergangstemperatur besitzt als das erste Polymermaterial (A).

14. Verfahren nach Anspruch 13, **dadurch gekennzeichnet, dass** das organische Polymermaterial in einem Anteil von 5 bis 30 Ma.-% vorliegt, bezogen auf die Summe aus Flüssigkristall-Material und organischem Polymermaterial.

15. Verfahren nach einem der Ansprüche 13 und 14, wobei der oder ein letzter Abkühlschritt so langsam erfolgt, dass mindestens 30%, vorzugsweise mindestens 50% der Bereiche aus Flüssigkristall-Material eine laterale Ausdehnung von mindestens 20 µm erhalten.

## Claims

1. A display cell, comprising two plates uniformly spaced apart from one another, of which at least one is transparent, the space between the plates being filled with a liquid crystal material containing, inhomogeneous and anisotropic layer and having a first region, which completely, substantially or mainly comprises liquid crystal material, as well as a second region, which completely, substantially or mainly comprises organic polymer material, the first region being sub-divided into separate compartments and the second region surrounding these compartments, the lateral extent of the compartments being greater than the thickness of the layer and/or being in the range of 10 µm to 100 µm, **characterised in that** the second region has first part regions with a first polymer material (A) and second part regions with a second polymer material (B), the polymer material (B) having a lower glass transition temperature than the polymer material (A).

2. A display cell according to claim 1, **characterised in that** the first polymer material (A) contains an organic polymer with a glass transition temperature of at least 60°C, preferably of at least 80°C and particularly preferably at least 100°C or a mixture of polymers of this type.

3. A display cell according to either of claims 1 or 2, **characterised in that** the first polymer material (A) comprises one or more poly(meth)acrylates or contains this/these poly(meth)acrylates as the main constituent.

4. A display cell according to any one of the preceding claims, **characterised in that** the second polymer material (B) has a glass transition temperature which is close to or below the clarification temperature of the liquid crystal material.

5. A display cell according to claim 4, wherein a portion of the liquid crystal compartments is surrounded by part regions with the first polymer material (A) and another portion of the liquid crystal compartments is surrounded by part regions with the second polymer material (B).

6. A display cell according to claim 5, wherein the liquid crystal compartments which are surrounded by part regions with the second polymer material (B) have a lateral extent of below 20 µm.

7. A mixture comprising a liquid crystal material and an organic polymer material, the mixture being in a position, when heated above the clarification temperature of the liquid crystal material, to become homogeneous and isotropic and, on cooling below the clarification temperature of the liquid crystal material, to separate into different regions, a first region comprising exclusively, substantially or mainly of anisotropic liquid crystal material, while a second region comprising exclusively, substantially or mainly of organic polymer material, the organic polymer material being present in a fraction of 5 to 30 % by mass, based on the sum of liquid crystal material and organic polymer material, the polymer material having a first polymer material (A) with a glass transition temperature of at least 60°C, **characterised in that** the polymer material has a second polymer material (B) with a glass transition temperature which is below that of the first polymer material (A).

8. A mixture according to claim 7, wherein the first polymer material (A) contains a polyacrylate or polymethacrylate, selected from polyalkyl(meth)acrylates and polycycloalkyl(meth)acrylates, which have at least one substituted or unsubstituted cyclic hydrocarbon and/or a branched alkyl group in the alcohol part of the esters.

9. A mixture according to claim 8, wherein the substituted or unsubstituted cyclic hydrocarbon is a cycloalkane and/or a constituent of a condensed or bridged ring system.

10. A mixture according to claim 7 or 8, wherein the liquid crystal material has a clarification temperature which is close to or below the glass transition temperature of the polymer material.

11. A mixture according to any one of claims 7 to 10, **characterised in that** the glass transition temperature of the first organic polymer (A) is at least 80°C, preferably at least 100°C.

12. A mixture according to any one of claims 8, 9 or 10, **characterised in that** the second polymer material (B) has a glass transition temperature, which is close to or below the clarification temperature of the liquid crystal material.

13. A method for producing a compartmentalised liquid crystal layer in a display cell, having the following steps:
(a) providing a mixture, comprising a liquid crystal material and an organic polymer material, which has at least a first polymer material (A), the mixture being in a position, on heating above the clarification temperature of the liquid crystal material, to become homogeneous and isotropic and, on cooling below the clarification temperature of the liquid crystal material, to separate into different regions, a first region comprising exclusively, substantially or mainly of anisotropic liquid crystal material, while a second region exclusively, substantially or mainly comprises organic polymer material,
(b) heating the mixture to a temperature above the clarification temperature of the liquid crystal material,
(c) pouring the mixture into a display cell, and
(d) cooling the mixture with the aid of a temperature regime allowing the separation of liquid crystal material and polymer material, the or a last cooling step taking place so slowly that the regions of liquid crystal material receive a lateral extent of 10 µm to 100 µm,
**characterised in that** the mixture provided in step (a) has a second polymer material (B), the second polymer material (B) having a lower glass transition temperature than the first polymer material (A).

14. A method according to claim 13, **characterised in that** the organic polymer material is present in a fraction of 5 to 30 % by mass, based on the sum of liquid crystal material and organic polymer material.

15. A method according to either of claims 13 or 14, wherein the or a last cooling step takes place so slowly that at least 30%, preferably at least 50% of the regions of liquid crystal material receive a lateral extent of at least 20 µm.

## Revendications

1. Cellule d'affichage, comprenant deux plaques uniformément espacées l'une de l'autre, dont au moins une est transparente, dans laquelle l'espace intermédiaire entre les plaques est rempli d'une couche anisotrope et hétérogène, comprenant un matériau de cristaux liquides et présente une première zone, qui se compose entièrement, essentiellement ou principalement de matériau de cristaux liquides, ainsi qu'une deuxième zone, qui se compose entièrement, essentiellement ou principalement de matériau polymère organique, dans laquelle la première zone est subdivisée en compartiments séparés et la deuxième zone entoure ces compartiments, dans laquelle l'extension latérale des compartiments est plus grande que l'épaisseur de la couche et/ou se situe dans la plage de 10 µm à 100 µm, **caractérisée en ce que** la deuxième zone présente des premières régions partielles avec un premier matériau polymère (A) et des deuxièmes régions partielles avec un deuxième matériau polymère (B), dans laquelle le matériau polymère (B) possède une température de transition vitreuse inférieure à celle du matériau polymère (A).

2. Cellule d'affichage selon la revendication 1, **caractérisée en ce que** le premier matériau polymère (A) comprend un polymère organique avec une température de transition vitreuse d'au moins 60°C, de préférence d'au moins 80°C et de préférence encore d'au moins 100°C ou un mélange de tels polymères.

3. Cellule d'affichage selon l'une quelconque des revendications 1 et 2, **caractérisée en ce que** le premier matériau polymère (A) se compose d'un ou de plusieurs poly(méth-)acrylates ou contient ce/ces poly(méth-)acrylates comme composant principal.

4. Cellule d'affichage selon l'une quelconque des revendications précédentes, **caractérisée en ce que** le deuxième matériau polymère (B) présente une température de transition vitreuse, qui est située près de ou en dessous de la température de clarification du matériau de cristaux liquides.

5. Cellule d'affichage selon la revendication 4, dans laquelle une partie des compartiments de cristaux liquides est entourée par des régions partielles avec le premier matériau polymère (A) et une autre partie des compartiments de cristaux liquides est entourée par des régions partielles avec le deuxième matériau polymère (B).

6. Cellule d'affichage selon la revendication 5, dans laquelle les compartiments de cristaux liquides, qui sont entourés par des régions partielles avec le deuxième matériau polymère (B), présentent une extension latérale de moins de 20 µm.

7. Mélange, comprenant un matériau de cristaux liquides ainsi qu'un matériau polymère organique, dans lequel le mélange est en mesure de devenir isotrope et homogène par un chauffage au-delà de la température de clarification du matériau de cristaux liquides et de se séparer en différentes zones par un refroidissement en dessous de la température de clarification du matériau de cristaux liquides, dans lequel une première zone se compose exclusivement, essentiellement ou principalement de matériau de cristaux liquides anisotrope, tandis qu'une deuxième zone se compose exclusivement, essentiellement ou principalement de matériau polymère organique, dans lequel le matériau polymère organique est présent en une proportion de 5 à 30 % en masse, rapportée à la somme du matériau de cristaux liquides et du matériau polymère organique, dans lequel le matériau polymère organique comprend un premier matériau polymère (A) avec une température de transition vitreuse d'au moins 60°C, **caractérisé en ce que** le matériau polymère comprend un deuxième matériau polymère (B) avec une température de transition vitreuse qui est située en dessous de celle du premier matériau polymère (A).

8. Mélange selon la revendication 7, dans lequel le premier matériau polymère (A) contient un polyacrylate ou un polyméthacrylate, sélectionné parmi les polyalkyl(méth-)acrylates ainsi que les polycycloalkyl(méth-)acrylates, qui présentent au moins un hydrocarbure cyclique substitué ou non substitué et/ou un groupe alkyle ramifié dans la partie alcool des esters.

9. Mélange selon la revendication 8, dans lequel l'hydrocarbure cyclique substitué ou non substitué est un cycloalcane et/ou un constituant d'un système annulaire condensé ou ponté.

10. Mélange selon la revendication 7 ou 8, dans lequel le matériau de cristaux liquides possède une température de clarification, qui se situe près de ou en dessous de la température de transition vitreuse du matériau polymère.

11. Mélange selon l'une quelconque des revendications 7 à 10, **caractérisé en ce que** la température de transition vitreuse du premier polymère organique (A) vaut au moins 80°C, de préférence au moins 100°C.

12. Mélange selon l'une quelconque des revendications 8, 9 ou 10, **caractérisé en ce que** le deuxième matériau polymère (B) présente une température de transition vitreuse qui se situe près de ou en dessous de la température de clarification du matériau de cristaux liquides.

13. Procédé de fabrication d'une couche de cristaux liquides compartimentée dans une cellule d'affichage, comprenant les étapes suivantes:
(a) préparer un mélange, comprenant un matériau de cristaux liquides ainsi qu'un matériau polymère organique, qui comprend au moins un premier matériau polymère (A), dans lequel le mélange est en mesure de devenir isotrope et homogène par un chauffage au-delà de la température de clarification du matériau de cristaux liquides et de se séparer en différentes zones par un refroidissement en dessous de la température de clarification du matériau de cristaux liquides, dans lequel une première zone se compose exclusivement, essentiellement ou principalement de matériau de cristaux liquides anisotrope, tandis qu'une deuxième zone se compose exclusivement, essentiellement ou principalement de matériau polymère organique,
(b) chauffer le mélange à une température supérieure à la température de clarification du matériau de cristaux liquides,
(c) verser le mélange dans une cellule d'affichage, et
(d) refroidir le mélange à l'aide d'un régime de température, qui permet la séparation du matériau de cristaux liquides et du matériau polymère, dans lequel la ou une dernière étape de refroidissement se passe à ce point lentement que les zones en matériau de cristaux liquides obtiennent une extension latérale de 10 µm à 100 µm,
**caractérisé en ce que** le mélange préparé à l'étape (a) présente un deuxième matériau polymère (B), dans lequel le deuxième matériau polymère (B) présente une température de transition vitreuse inférieure à celle du premier matériau polymère (A).

14. Procédé selon la revendication 13, **caractérisé en ce que** le matériau polymère organique est présent en une proportion de 5 à 30 % en masse, rapportée à la somme du matériau de cristaux liquides et du matériau polymère organique.

15. Procédé selon l'une quelconque des revendications 13 et 14, dans lequel la ou une dernière étape de refroidissement se passe à ce point lentement qu'au moins 30 %, de préférence au moins 50 % des zones en matériau de cristaux liquides obtiennent une extension latérale d'au moins 20 µm.
